# EUROPEAN PATENT SPECIFICATION

(11) **EP 1 642 470 B1**
(45) Date of publication and mention of the grant of the patent: **17.07.2019**
(21) Application number: 04751739.6
(22) Date of filing: 10.05.2004
(51) Int. Cl.: H04L 29/08

(54) **CONTENT PUBLISHING OVER MOBILE NETWORKS**
VERÖFFENTLICHUNG VON INHALTEN ÜBER MOBILE NETZE
PUBLICATION DE CONTENUS AU SEIN DE RESEAUX MOBILES

(30) Priority: 09.05.2003 IS 681303
(43) Date of publication of application: 05.04.2006
(73) Proprietor: HERE Global B.V., 5611 ZT Eindhoven (NL)
(72) Inventor: BALDURSSON, Sveinn, IS-104 Reykjavik (IS)
(74) Representative: Potter Clarkson
(86) International application number: PCT/US2004/014508
(87) International publication number: WO 2004/102855

(56) References cited:
- US-A1- 2001 028 313
- US-A1- 2004 137 921
- VARTIAINEN PANU: "Using Metadata and Context Information in Sharing Personal Content of Mobile Users; Master's Thesis; University of Helsinki; Department of Computer Science" INTERNET CITATION, [Online] 1 April 2003 (2003-04-01), XP002424893 Retrieved from the Internet: URL:http://koti.phnet.fi/ panuvart/Vartiainen-Thesis-2003.pdf> [retrieved on 2007-03-15]
- CHEN G ET AL: "A Survey of Context-Aware Mobile Computing Research" INTERNET CITATION, [Online] XP002227105 Retrieved from the Internet: URL:http://www1.cs.dartmouth.edu/~dfk/pape rs/chen:survey-tr.pdf> [retrieved on 2003-01-14]

## Description

### TECHNICAL FIELD

This description relates to systems for publishing content using mobile networks.

### BACKGROUND

Publishing by individuals is an increasingly popular area of World Wide Web content creation. Of particular interest is the rise of personal and individual diaries such as so-called "web logs" or "blogs". These diaries are simple to use and easy to read. They are mostly text-based and have the time of release as well as the date published as integral part of the content. The strength of the "blog" is that it is instantly published and is therefore semi-synchronous in style. A limitation of the blog is that it is only available on personal computers and only edited on personal computers.

The growth of mobile phones has been rapid in the global market. Of particular interest is the recent growth of Internet and data-enabled mobile phones, whether they are 2G or 3G (i.e., 2^{nd} or 3^{rd} Generation) networks. People are increasingly mobile in their communication abilities due to the surge of mobile telephony and data capabilities of mobile phones. Peoples' behaviour at work is changing as well as in their free time. More work and more leisure are possible on-line and over mobile networks.

"Using Metadata and Context Information in Sharing Personal Content of Mobile Users", Panu Vartiainen, Master's Thesis, University of Helsinki, Department of Computer Science, 1 April 2003; discusses the possibility of using meta data and context information in annotating, sharing and searching user created content in the mobile domain. A disclosed prototype system implementation demonstrates that a part of creation-time context, such as the location and temporal context, can be automatically gathered in a mobile phone, and stored as metadata for the content.

### SUMMARY

According to one general aspect, a system includes a server operable to receive content over a mobile network from a mobile computing device operated by a first user, a location-stamping subsystem operable to assign location information describing a location of the first user to the content, and a mobile data delivery platform operable to output the content over a computer network to a second user.

Implementations may include one or more of the following features. For example, a time-stamping subsystem may be included that is operable to assign a time of receipt of the content at the server, or a time of generation of the content at the mobile computing device. The server may receive a request from the second user for time-specified content, and output the time-specified content to the second user using the time-stamping subsystem.

The mobile data delivery platform may be operable to deliver the content to a mobile phone of the second user, and the server may be operable to store subscription information for
the second user, and further operable to forward the content to the second user over the mobile phone, based on the subscription information.

The server may be operable to receive secondary content from the second user and associate the secondary content to the content. The server may be operable to sort and index the content relative to existing content or categories, and further operable to provide searching of the content based on the sorting and indexing thereof.

The content may include text, image information, audio information, or numerical information. The location-stamping subsystem may obtain the location information for the first user from cell positioning information obtained from the mobile network, or by using a location based server or a global positioning system. The server may be operable to permanently store the content.

A system is described that allows users to instantly generate permanent text content from a mobile phone ("mBlogs") as time sensitive log files, or "blogs" generated over a mobile network. The system may allow users to view permanent and instantly-generated mBlog content from a mobile phone, or from a personal computer.

The system may allow users to interact and publish permanent and instantly-generated comments linked to the mBlogs. Categorization and indexing of the mBlogs may be performed for the purpose of facilitating search and matching of viewers or writers of mBlogs.

Images, audio, and/or numerical content may be included in addition to the published text content. Users may subscribe to mBlogs over a mobile network using a mobile phone. Users may be able to log on to a specific time that has already past, and access existing content published at the specified time. Also, Users may log onto a specific time and access current content published outside of the mBlog format, such as 3rd party databases published at the specified time, including images, weather, market and news information for a multimedia "Time Capsule" experience of a user logging on an existing mBlog.

The details of one or more implementations are set forth in the accompanying drawings and the description below. Other features will be apparent from the description and drawings, and from the claims.

### DESCRIPTION OF DRAWINGS

FIG. 1 is a block diagram of the basic interaction of the users of the system, where User (A) and User (B) are connected to a mobile network with mobile phones.
FIG. 2 is a block diagram showing two users connected to an mBlog server, where User (A) is connected over a mobile network, but User (B) is viewing mBlog content on a personal computer connected to any IP network.
FIG. 3a is a block diagram showing User (B) submitting a query to an mBlog server.
FIG. 3b is a block diagram showing query results submitted from an mBlog server to the user.
FIG. 4 is a block diagram showing User (B) inserting permanent comments.
FIG. 5 is a block diagram showing User (A) submitting and User (B) downloading an image.
FIG. 6 is a block diagram showing User (A) submitting and User (B) downloading audio.
FIG. 7 is a block diagram showing User (A) submitting and User (B) downloading numerical content.
FIG. 8a is a block diagram showing User (B) submitting a request for subscription of mBlogs
FIG. 8b is a block diagram showing User (B) receiving a subscribed mBlog message.

### DETAILED DESCRIPTION

The mBlog invention relates to a system that enables the real-time, location-based generation of permanently published content on data-enabled mobile phones, via mobile networks. The invention enables users of data-enabled mobile phones to write text, insert images and other digital content, and upload such content to data servers available over mobile networks on mobile phones and on personal computers over the Internet. The system detects, generates, and publishes data confirming the location and time of the user when the published content is submitted to the server. The location data is extracted by the system from the mobile network, either directly from the cell network or with assisted advanced location tracking. The invention allows other users to view, download, subscribe to, and interact with the published content using a mobile phone.

The invention allows users to create and publish content that has before been limited to fixed line computers, in particular personal computers, whereby the power of instant diaries on-line, or blogs has been limited to such settings. In contrast, the invention makes use of the power of mobile, data-enabled phones for generating and viewing blogs. Furthermore, the invention allows for blogs generated by a mobile phone to be viewed on-line by users of personal computers, thus making the most of both market segments. The "mobile blog" can revolutionize the way people generate blogs, as they are no longer confined to publishing on personal computers, and are only limited by the coverage of data-enabled mobile networks.

mBlog uses the location of the user as an essential and permanent part of the published content. This is done by using the data available from the mobile network, either the cell positioning data or by enhanced location data generated with location based servers and/or global positioning systems. The mBlog system uses mobile subscription delivery for unique real-time reception of mBlog content via multimedia messaging and WAP push. This is fundamentally different from existing use of mobile phones for web blogs, and utilizes the essential features of mobility harnessed with the mBlog invention, both on the receiving end, as well as on the authoring/publishing end.

In other words, the invention is made to facilitate the creation and viewing of "personal diaries" by harnessing the power of mobile networks and mobile phones. The invention is based on a system for instant and permanent publishing of text, images and audio content over mobile networks. The system allows the user of the invention to write text, attach image and audio files, and publish those by using a mobile phone and without the use of a personal computer.

The system allows the published content to be downloaded by other users by mobile phones over mobile networks. No other computer apparatus is needed for the generation, subscription, searching or viewing of the content than existing mobile networks and the naBlog system.

The published files are permanent and certified as such by the system. This information is stored on computer servers with the published content for the lifetime of the system. The published files can be viewed by any mobile terminal allowing for text, image or audio download, viewing, reading, or listening on any known current and future mobile delivery platform.

The operator of the mobile network can limit the access of the published content by means of tarriffing and by creating specific subscriptions for the service of writing, viewing, and adding to the published content. To particular interest of the invention is the capability of offering multimedia subscription where the mBlog content is sent (pushed) to the subscriber in short messaging as well as multimedia messaging format.

The system creates an automatic and permanent "time-stamp," where the publishing time is a permanent and non-erasable part of the published file. The system has automatic and permanent "location-stamp," where the current user location is a permanent and non-erasable part of the published file. The system allows publishing of visual representation of the user location, i.e., maps showing where the user is publishing the published content at a given time.

The system allows users to subscribe to published content from other users, i.e., by multimedia messaging (MMS) using the mBlog server 108 as well as MMS servers. This enables users to receive multimedia messages including images, audio as well as text. Furthermore this enables users to receive messages as soon as they are created, making the messaging more synchronous.

The published files can be categorized and indexed according to content. When the numbers of mBlogs are increasing, the categorization of the content becomes valuable for publishers and viewers alike. Network operator or its assignees can maintain the categorization according to the set-up made by the network operator. This allows users to find material of interest, and mBlog creators to reach a more receptive audience.

Indexing of content allows users to file and search for individual files, content, authors, by time, location and relevance. The indexing is defined by the set up of the mBlog server 108 using a match list of preferred parameters and values.

The mBlog system allows the users to search by categories as well as by indexed context. With the growth of more and more mBlogs, categorization makes for a better usability, as users can better find the content they seek through such categorization.

Users can register individual mBlog content files in categorized mBlog communities. Network operator or individual users define these categories in a hierarchical manner depending on the set-up defined by the network operator.

Viewers of mBlogs can interact with user-generated content by publishing comments that are directly linked with the mBlog content. This allows viewers to add information as well as opinions that are related to the subject of an mBlog.

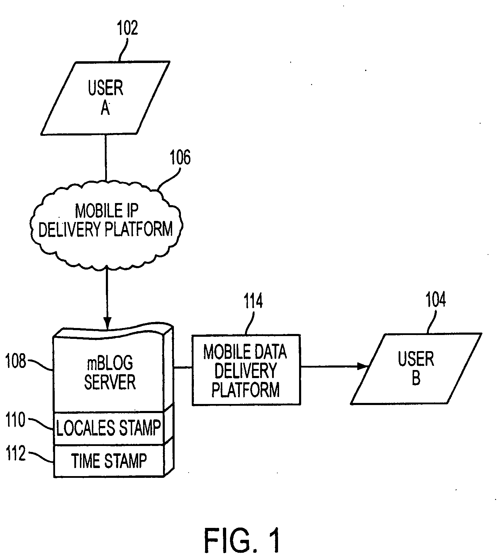

FIG. 1 is a block diagram of the basic interaction of the users of the system, where User (A) 102 and User (B) 104 are connected to a mobile network 106 with mobile phones. Specifically, in FIG. 1, User (A) 102 is generating an mBlog and user (B) 104 is viewing the mBlog on a mobile phone over the mobile network 106.

The user (A) 102 can create a mBlog content using the mobile phone when using the mBlog application. As a subscriber to the mBlog service the user (A) 102 can easily generate text content on the mobile phone. The user (A) 102 accesses an allocated mBlog editing area by selecting "my Blog" from the mobile phone. From there the user (A) 102 can type in text content using the numerical keyboard on the mobile phone, in the same way as when typing small text messages (SMS).

When satisfied with the text content, the mBlog creator can post the text content as mBlog message on the network with one-click confirmation. The text is location stamped and time-stamped by an mBlog server 108, using a location stamping subsystem 110 and a time-stamping subsystem 112, respectively, and published over the Internet on the World Wide Web, Wireless Application Protocol (WAP), and pushed to subscribers of mBlog multimedia service (MMS).

Other users (B) can view the text content on other mobile phones using the mBlog application, as delivered by a mobile data delivery platform 114 making use of the protocols/services just discussed. The text content published by the user (A) 102 can be viewed instantaneously after the submitting over the network. As just discussed, the text content may contain time of publishing, and may contain location information ("location stamp"), as permanent part of the published text.

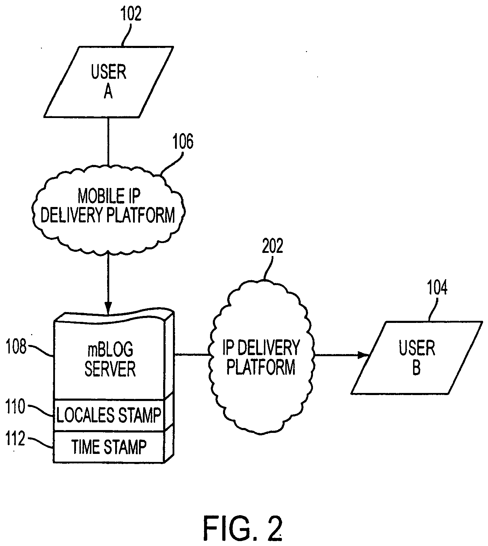

FIG. 2 is a block diagram showing two users connected to an mBlog server, where User A is connected over a mobile network 106, but User B is viewing mBlog content on a personal computer connected to any IP network (represented by an IP network 202).

Users connected to the World Wide Web by the means of a personal computer (User B) can view text content published by mBlog content publishers (User A). As in FIG. 1, the user (B) 104 can download and read the published content immediately after submitting of the content by the issuer (A).

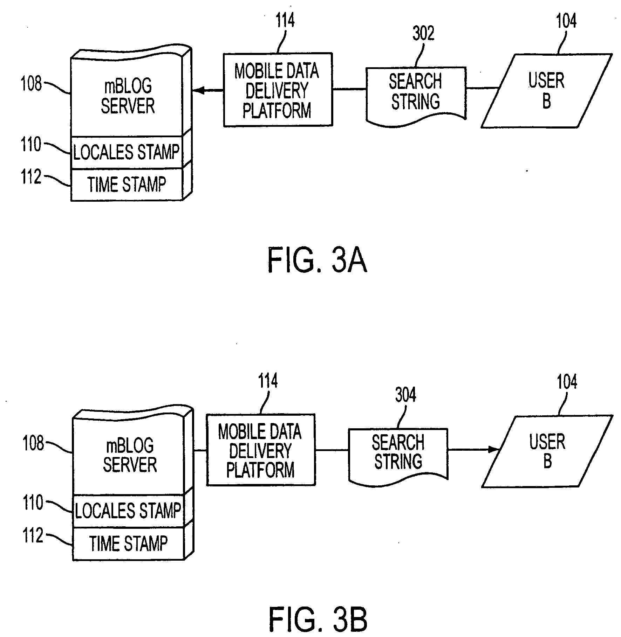

FIG 3a is a block diagram showing User (B) 104 submitting a query or search string 302 to the mBlog server 108. Specifically, User (B) 104 is submitting a query for mBlog messages by context on a mobile phone over a mobile network 106/mobile delivery platform 114.

Users can search for a specific mBlog, by individual words, combination of words, fragments, and phrases. The search string is submitted over the network by a user of a mobile phone or personal computer to the mBlog server. FIG. 3b is a block diagram showing query results 304 submitted from an mBlog server 108 to the user, in which the server performs a query and pushes the results to the User (B) 104 over the network.

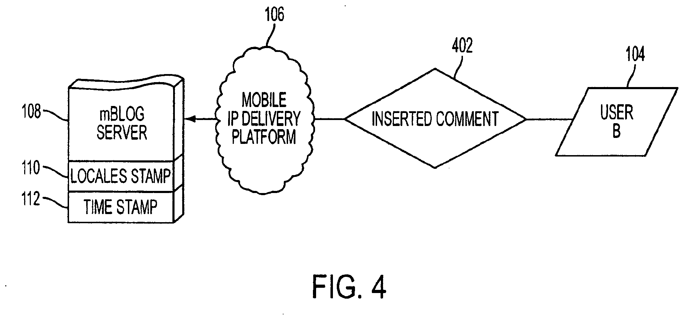

FIG. 4 is a block diagram showing User (B) 104 inserting permanent comments 402. Specifically, FIG. 4 illustrates User (B) 104 inserting permanent comments 402 linked to mBlog content that is generated by User (A) 102. Thus, as shown, users can write and publish (insert) comments on the mBlog text content.

This is facilitated, for example, by a command "add comments" issued as part of the published content. By selecting this command, the User (B) 104 can post text comments that can be viewed by other users. As in the case of the original mBlog text, the "comments" contain the time of issue as a permanent part of the published content.

Users can download and read the published comments by means, for example, of a command "view comments" issued as part of the published content. When selected, the "view comments" command opens a new window with all relevant comments listed in order of publishing time.

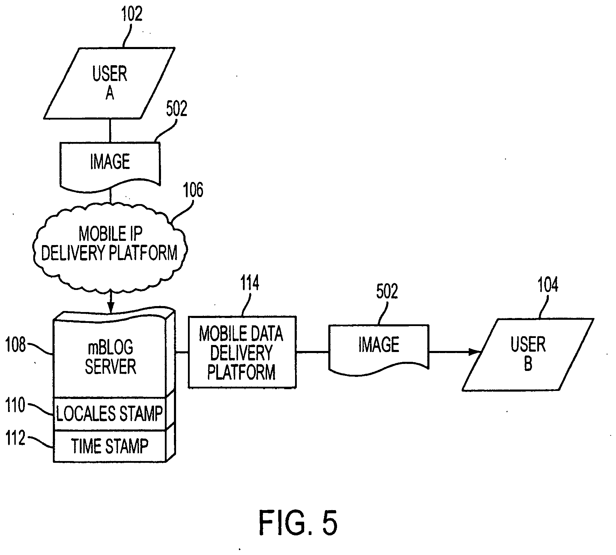

FIG. 5 is a block diagram showing User (A) 102 submitting and User (B) 104 downloading an image 502. More specifically, FIG. 5 illustrates User (A) 102 generating mBlog content containing an image 502 and User (B) 104 viewing the image 502 on a mobile phone over a mobile network 106.

As shown, a creator of an mBlog (User A) can post (upload) an image as part of the published mBlog. The image 502 becomes an integral part of the text content, available for viewing by terminals that support viewing of graphical images. Any user of the mBlog application, either using a mobile network 106 or any computer network, is able to access the images as part of mBlog content.

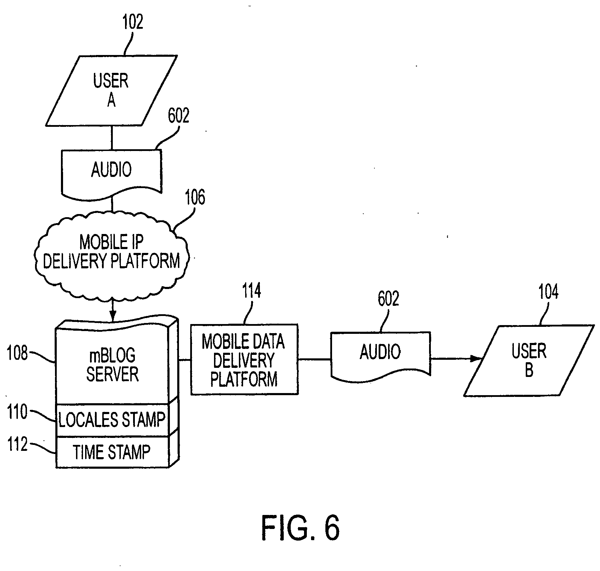

FIG. 6 is a block diagram showing User (A) 102 submitting and User (B) 104 downloading audio 602, where User (B) 104 is accessing the audio on a mobile phone over mobile network 106. A shown, a creator of an mBlog (User A) can post (upload) an audio file 602 as part of the published mBlog. The audio file 602 becomes an integral part of the text content, available for playback by terminals that support playback of audio. Any user of the mBlog application, either using a mobile network 106 or any computer network is able to access the audio as part of mBlog content.

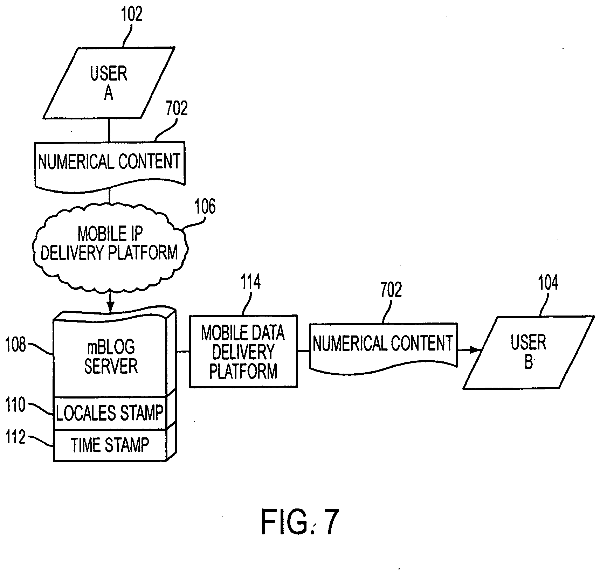

FIG. 7 is a block diagram showing User (A) 102 submitting and User (B) 104 downloading numerical content 702, on a mobile phone, over a mobile network 106. As shown, a creator of an mBlog (User A) can post (upload) a numerical content file 702 as part of the published mBlog. Any user of the mBlog application, either using a mobile network 106 or any computer network is able to access the numerical content file 702 part of mBlog content.

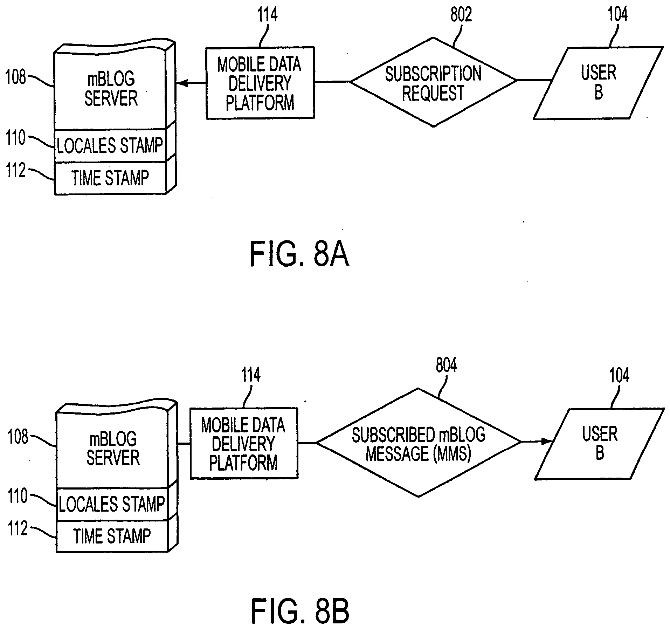

FIG. 8a is a block diagram showing User (B) 104 submitting a request 802 for subscription of mBlogs on a mobile phone, over a mobile network 106. FIG. 8b is a block diagram showing User (B) 104 receiving a subscribed mBlog message 804 on a mobile phone, over a mobile network 106.

As shown, users can subscribe to specific mBlog content. The User (B) 104 subscribes by submitting a subscription request 802 over the mobile network 106 to the mBlog server. The mBlog server 108 lists the respective mBlog subscribers to the subscribers list of that particular mBlog, and compiles a message 804 to each of the subscribers from the mBlog content. The message 804 is sent to the mBlog subscribers in multimedia format with all the mBlog components, such as text, images, audio or numerical files. The user (B) 104 receives the mBlog in multimedia message format (MMS, or similar) over the mobile network 106.

A number of implementations have been described. Nevertheless, it will be understood that various modifications may be made. Accordingly, other implementations are within the scope of the following claims.

## Claims

1. A system comprising:
a server (108) operable to receive content over a mobile network (106), from a mobile computing device operated by a first user (102), for publishing to a blog;
a location-stamping subsystem (110), different to the mobile computing device, operable to, in response to receiving the content, determine a location of the mobile computing device at a time when the content was received by the server and assign, to the content, location information describing the determined location of the mobile computing device at the time when the content was received by the server (108); and
a mobile data delivery platform (114), in communication with the server, operable to output the content and the location information over a computer network to a second user (104), the content and the location information to be published in the blog.

2. The system of claim 1 comprising a time-stamping subsystem (112) operable to:
assign a time of receipt of the content at the server (108), or a time of generation of the content at the mobile computing device (102), to the content, the assigned time to be published in the blog.

3. The system of claim 2 wherein the server (108) is operable to:
receive a request from the second user (104) for time-specified content, and
output the time-specified content to the second user using the time-stamping subsystem (112).

4. The system of claim 1 wherein the mobile data delivery platform (114) is operable to deliver the content to a mobile phone of the second user (104).

5. The system of claim 4 wherein the server (108) is operable to store subscription information for the second user, and is further operable to forward the content to the second user over the mobile phone, based on the subscription information.

6. The system of claim 1 wherein the server (108) is operable to receive secondary content from the second user and associate the secondary content to the content.

7. The system of claim 1 wherein the server (108) is operable to sort and index the content relative to existing content or categories, and is further operable to provide searching of the content based on the sorting and indexing thereof.

8. The system of claim 1 wherein the content includes text, image information, audio information, or numerical information.

9. The system of claim 1 wherein the location-stamping subsystem (110) obtains the location information from cell positioning information obtained from the mobile network (106).

10. The system of claim 1 wherein the location-stamping subsystem (110) obtains the location information using a location based server or a global positioning system.

11. The system of claim 1 wherein the server (108) is operable to permanently store the content.

12. A computer-implemented method comprising:
receiving content over a mobile network (106), from a mobile computing device operated by a first user (102), at a server, for publishing to a blog;
in response to receiving the content, determining, by a location-stamping subsystem different from the mobile computing device, a location of the mobile computing device at a time when the content was received by the server;
assigning, to the content, location information describing the determined location of the mobile computing device at the time when the content was received, and
outputting the content and the location information over a computer network to a second user, the content and the location information to be published in the blog.

13. The method of claim 12, further comprising:
assigning a time of the receipt of the content, or a time of generation of the content at the mobile computing device, to the content, the assigned time be published in the blog.

14. The method of claim 12 further comprising: receiving a request from a second user (104) for time-specified content, and outputting the time-specified content to the second user.

15. The method of claim 12 further comprising delivering the content to a mobile phone of the second user (104).

## Patentansprüche

1. System, Folgendes umfassend:
einen Server (108), der zum Empfangen von Inhalt über ein mobiles Netzwerk (106) von einer von einem ersten Benutzer (102) betriebenen mobilen Rechenvorrichtung zum Veröffentlichen in einem Blog betriebsfähig ist;
ein Standortstempelteilsystem (110), das sich von der mobilen Rechenvorrichtung unterscheidet und in Reaktion auf das Empfangen des Inhalts betriebsfähig ist, einen Standort der mobilen Rechenvorrichtung zu einem Zeitpunkt zu bestimmen, zu dem der Inhalt von dem Server empfangen wurde, und dem Inhalt Standortinformationen zuzuweisen, die einen bestimmten Standort der mobilen Rechenvorrichtung zu dem Zeitpunkt beschreiben, zu dem der Inhalt von dem Server (108) empfangen wurde; und
eine mobile Datenlieferplattform (114), die in Kommunikation mit dem Server steht und betriebsfähig ist, den Inhalt und die Standortinformationen über ein Computernetzwerk an einen zweiten Benutzer (104) auszugeben, wobei der Inhalt und die Standortinformationen in dem Blog veröffentlicht werden sollen.

2. System nach Anspruch 1, umfassend ein Zeitstempelteilsystem (112), das zu Folgendem betriebsfähig ist:
Zuweisen einer Empfangszeit des Inhalts auf dem Server (108) oder eine Erzeugungszeit des Inhalts auf der mobilen Rechenvorrichtung (102), wobei die zugewiesene Zeit in dem Blog veröffentlicht werden soll.

3. System nach Anspruch 2, wobei der Server (108) zu Folgendem betriebsfähig ist:
Empfangen einer Anforderung von dem zweiten Benutzer (104) nach zeitspezifischem Inhalt und Ausgeben des zeitspezifischen Inhalts an den zweiten Benutzer unter Verwendung des Zeitstempelteilsystems (112).

4. System nach Anspruch 1, wobei die mobilen Datenlieferplattform (114) betriebsfähig ist, den Inhalt an ein Mobiltelefon des zweiten Benutzers (104) zu liefern.

5. System nach Anspruch 4, wobei der Server (108) betriebsfähig ist, Teilnahmeinformationen für den zweiten Benutzer zu speichern, und ferner betriebsfähig ist, den Inhalt an den zweiten Benutzer über das Mobiltelefon auf Grundlage der Teilnahmeinformationen weiterzuleiten.

6. System nach Anspruch 1, wobei der Server (108) betriebsfähig ist, sekundären Inhalt von dem zweiten Benutzer zu empfangen und den sekundären Inhalt dem Inhalt zuzuordnen.

7. System nach Anspruch 1, wobei der Server (108) betriebsfähig ist, den Inhalt in Bezug auf bestehenden Inhalt oder Kategorien zu sortieren und zu indizieren und ferner betriebsfähig ist, das Durchsuchen des Inhalts auf Grundlage des Sortierens und Indizierens davon bereitzustellen.

8. System nach Anspruch 1, wobei der Inhalt Text, Bildinformationen, Audioinformationen oder numerische Informationen beinhaltet.

9. System nach Anspruch 1, wobei das Standortstempelteilsystem (110) die Standortinformationen aus Zellenpositionsinformationen erhält, die von dem Mobilfunknetz (106) erhalten werden.

10. System nach Anspruch 1, wobei das Standortstempelteilsystem (110) die Standortinformationen unter Verwendung eines standortsbasierten Servers oder eines globalen Positionierungssystems erhält.

11. System nach Anspruch 1, wobei der Server (108) betriebsfähig ist, den Inhalt dauerhaft zu speichern.

12. Computerimplementiertes Verfahren, Folgendes umfassend:
Empfangen von Inhalt über ein mobiles Netzwerk (106) von einer von einem ersten Benutzer (102) betriebenen mobilen Rechenvorrichtung zum Veröffentlichen in einem Blog an einem Server;
als Reaktion auf das Empfangen des Inhalts, Bestimmen eines Standorts der mobilen Rechenvorrichtung zu einem Zeitpunkt, zu dem der Inhalt von dem Server empfangen wurde, durch ein Standortstempelteilsystem, das sich von der mobilen Rechenvorrichtung unterscheidet;
Zuweisen von Standortinformationen zu dem Inhalt, die den bestimmten Standort der mobilen Rechenvorrichtung zu dem Zeitpunkt beschreiben, zu dem der Inhalt empfangen wurde, und
Ausgeben des Inhalts und der Standortinformationen über ein Computernetzwerk an einen zweiten Benutzer, wobei der Inhalt und die Standortinformationen in dem Blog veröffentlicht werden sollen.

13. Verfahren nach Anspruch 12, ferner Folgendes umfassend:
Zuweisen einer Empfangszeit des Inhalts oder einer Erzeugungszeit des Inhalts dem Inhalt an der mobilen Rechenvorrichtung, wobei die zugewiesene Zeit in dem Blog veröffentlicht werden soll.

14. Verfahren nach Anspruch 12, ferner Folgendes umfassend:
Empfangen einer Anforderung von einem zweiten Benutzer (104) nach einem zeitspezifizierten Inhalt und Ausgeben des zeitspezifizierten Inhalts an den zweiten Benutzer.

15. Verfahren nach Anspruch 12, ferner umfassend das Liefern des Inhalts an ein Mobiltelefon des zweiten Benutzers (104).

## Revendications

1. Système comprenant :
un serveur (108) conçu pour recevoir du contenu sur un réseau mobile (106), à partir d'un dispositif informatique mobile exploité par un premier utilisateur (102), pour publication sur un blog ;
un sous-système d'estampillage d'emplacement (110), différent du dispositif informatique mobile, conçu pour déterminer, en réponse à la réception du contenu, un emplacement du dispositif informatique mobile à un moment où le contenu a été reçu par le serveur, et pour attribuer au contenu des informations de localisation décrivant l'emplacement déterminé du dispositif informatique mobile au moment où le contenu a été reçu par le serveur (108) ; et
une plate-forme de transmission de données mobiles (114) en communication avec le Fserveur, conçue pour générer le contenu et les informations de localisation sur un réseau informatique à un second utilisateur (104), les informations de contenu et de localisation devant être publiées sur le blog.

2. Système selon la revendication 1, comprenant un sous-système d'horodatage (112) conçu pour :
attribuer au contenu une heure de réception du contenu sur le serveur (108), ou une heure de génération du contenu sur le dispositif informatique mobile (102), ainsi que l'heure attribuée pour la publication sur le blog.

3. Système selon la revendication 2, dans lequel le serveur (108) est conçu pour :
recevoir une demande du second utilisateur (104) pour un contenu défini dans le temps, et transmettre le contenu défini dans le temps au second utilisateur à l'aide du sous-système d'horodatage (112).

4. Système selon la revendication 1, dans lequel la plate-forme de transmission de données mobiles (114) est conçue pour transmettre le contenu à un téléphone mobile du second utilisateur (104).

5. Système selon la revendication 4, dans lequel le serveur (108) est conçu pour stocker des informations d'abonnement pour le second utilisateur, et est également conçu pour transférer le contenu au second utilisateur via le téléphone mobile, en fonction des informations d'abonnement.

6. Système selon la revendication 1, dans lequel le serveur (108) est conçu pour recevoir le contenu secondaire du second utilisateur et associer le contenu secondaire au contenu.

7. Système selon la revendication 1, dans lequel le serveur (108) est conçu pour trier et indexer le contenu par rapport à un contenu ou à des catégories existants, et est également conçu pour permettre une recherche du contenu sur la base de son tri et de son indexation.

8. Système selon la revendication 1, dans lequel le contenu comprend du texte, des informations d'image, des informations audio ou des informations numériques.

9. Système selon la revendication 1, dans lequel le sous-système d'estampillage d'emplacement (110) obtient les informations de localisation à partir des informations de positionnement de cellule obtenues à partir du réseau mobile (106).

10. Système selon la revendication 1, dans lequel le sous-système de marquage de localisation (110) obtient les informations de localisation en utilisant un serveur basé sur la localisation ou un GPS.

11. Système selon la revendication 1, dans lequel le serveur (108) est conçu pour stocker le contenu de manière permanente.

12. Procédé informatisé comprenant :
la réception par un serveur de contenu sur un réseau mobile (106), depuis un dispositif informatique mobile exploité par un premier utilisateur (102), pour publication sur un blog ;
la détermination, par un sous-système d'estampillage d'emplacement différent du dispositif informatique mobile, d'un emplacement du dispositif informatique mobile à un moment où le contenu a été reçu par le serveur, en réponse à la réception du contenu ;
l'attribution au contenu d'informations de localisation décrivant l'emplacement déterminé du dispositif informatique mobile au moment où le contenu a été reçu ; et
la transmission du contenu et des informations de localisation sur un réseau informatique à un second utilisateur, ainsi que les informations de contenu et de localisation devant être publiées sur le blog.

13. Procédé selon la revendication 12, comprenant en outre :
l'attribution au contenu d'une heure de réception du contenu ou d'une heure de génération du contenu sur le dispositif informatique mobile, ainsi que l'heure attribuée pour la publication sur le blog.

14. Procédé selon la revendication 12, comprenant en outre :
la réception d'une demande d'un second utilisateur (104) pour un contenu défini dans le temps, et la transmission du contenu défini dans le temps au second utilisateur.

15. Procédé selon la revendication 12, comprenant en outre la transmission du contenu à un téléphone mobile du second utilisateur (104).
